## Europäisches Patentamt
## European Patent Office
## Office européen des brevets

(19)

(11) Numéro de publication: **0 255 425 B1**

(12) **FASCICULE DE BREVET EUROPEEN**

(45) Date de publication du fascicule du brevet:
**25.10.89**

(51) Int. Cl.⁴: **B29C 67/14**

(21) Numéro de dépôt: **87401678.5**

(22) Date de dépôt: **17.07.87**

(54) **Dispositif pour la mise en forme automatique d'une nappe de fibres sur un moule, ainsi que machines comportant un tel dispositif.**

(30) Priorité: **21.07.86 FR 8610538**

(43) Date de publication de la demande:
**03.02.88 Bulletin 88/5**

(45) Mention de la délivrance du brevet:
**25.10.89 Bulletin 89/43**

(84) Etats contractants désignés:
**DE ES GB IT**

(56) Documents cités:
**EP-A- 0 144 927**
**FR-A- 2 529 871**
**US-A- 3 775 219**

**PLASTVERARBEITER,**
**vol. 33, no. 4, avril 1982, pages 399-403, Speyer, DE; W. ERMERT et al.: "Herstellung von Bauteilen aus CFK mit Industrierobotern"**

(73) Titulaire: **FOREST-LINE, B.P. 25, F-12700 Capdenac(FR)**

(72) Inventeur: **Tillement, Pierre, Avenue Léo Lagrange, F-12300 Decazeville(FR)**
Inventeur: **Greffioz, André, Lasterne Capdenac-le-Haut, F-46100 Figeac(FR)**

(74) Mandataire: **Loriot, Jacques et al, c/o SA. FEDIT-LORIOT 38, avenue Hoche, F-75008 Paris(FR)**

ACTORUM AG

## Description

L'invention concerne la mise en forme automatique, sur un moule, d'une nappe de fibres pour la fabrication de pièces diverses telles que des ailes d'avions, par exemple à partir d'un ruban composite constitué d'éléments de fibres encollées (par exemple par imprégnation de résine époxy) qui sont prédécoupés à la forme et aux dimensions désirées et qui sont maintenus entre deux pellicules de protection jusqu'à l'emplacement de leur application sur le moule. En général, la pellicule supérieure est constituée par un ruban de papier de caractéristiques mécaniques et chimiques appropriées, tandis que la pellicule inférieure est constituée par un film de matière plastique très mince. Le ruban composite ainsi constitué, d'une largeur souvent comprise entre 25 et 150 mm et d'une longueur d'environ 250 m, se présente sous la forme d'une bobine avec des flasques d'environ 450 mm de diamètre.

La technique consiste à déposer, sur le moule, avec la plus grande précision possible, les éléments de fibres (déjà découpés et imprégnés) véhiculés sous la forme du ruban composite précité. Les machines actuelles connues par exemple par le document FR-A 2 529 871, à cet efft, sont équipées d'un rouleau d'application du ruban de fibres sur le moule, la bande supérieure de papier étant récupérée après son passage sous le rouleau d'application, le film de protection inférieur ayant été évidemment éloigné juste avant l'application des fibres contre le moule.

Or le principe de l'utilisation d'un tel rouleau pour appliquer le ruban contre le moule, qu'il soit en une seule pièce ou en plusieurs, présente un certain nombre d'inconvénients.

Tout d'abord, le papier a tendance à dévier latéralement sous l'influence des irrégularités de la surface du moule (notamment s'il s'agit d'une surface gauche), ce qui donne naissance à des erreurs aléatoires non négligeables de positionnement des éléments prédécoupés de fibres sur le moule. L'utilisation d'un rouleau très souple ne permettrait pas de résoudre le problème.

Cet inconvénient paraît inévitable avec des machines qui utilisent un rouleau d'application du ruban sur le moule. En effet, pour éviter des déviations latérales du ruban il faudrait pouvoir le guider latéralement à proximité immédiate de la zone où il est appliqué contre les fibres par le rouleau ; or, on ne peut songer à prévoir une joue de guidage du ruban en saillie sur la surface cylindrique du rouleau à chacune des deux extrémités de celui-ci, car ce sont ces deux joues qui porteraient contre le moule et le rouleau ne pourrait pas exercer sa fonction de pressage des fibres contre le moule. On ne peut donc guider latéralement le ruban que par des organes situés à une certaine distance de ladite zone d'application des fibres, or cette distance est malheureusement trop grande et ne permet pas un guidage efficace du ruban, parce que le rouleau d'application est déjà d'un diamètre relativement grand et aussi parce que la bobine de laquelle se déroule le ruban composite et la bobine sur laquelle s'enroule le papier, après dépose des fibres sur le moule, sont relativement éloignées de la zone d'application des fibres ; on ne peut donc pas compter sur ces deux bobines pour s'en servir d'organes de guidage latéral véritablement efficace du ruban. Cette disposition générale classique restreint d'ailleurs les performances de la machine, car elle ne permet pas de garnir des creux de moule d'un faible rayon de courbure.

En outre l'expérience a montré que l'utilisation d'un rouleau d'application provoque la formation d'une "vague" sur les fibres dont la qualité de compactage se trouve ainsi réduite, ce qui se répercute sur les caractéristiques de la pièce finie.

Les difficultés que l'on rencontre, pour déposer convenablement les fibres contre la surface plus ou moins régulière du moule proviennent, surtout, de la gêne apportée par la dérive du papier de protection au point d'application des fibres.

Le but de l'invention est de remédier à cet inconvénient.

A cet effet, l'invention vise, tout d'abord, un procédé qui consiste à guider et à séparer la pellicule supérieure (souvent en papier) de protection du ruban de fibres à l'endroit qui précède immédiatement celui où l'on appuie sur le ruban de fibres pour l'appliquer sur le moule.

Grâce à ce nouveau procédé, on évite toute dérive latérale du papier et des fibres qui en sont solidaires, puisqu'on le guide presque jusqu'au point d'application des fibres sur le moule. Le papier n'est pas soumis à l'influence des irrégularités de la surface du moule et les fibres se trouvent maintenues dans une position très précise pratiquement jusqu'à l'endroit où elles vont être pressées contre le moule.

L'invention a également pour objet un dispositif pour la mise en oeuvre du procédé précité, qui comporte déjà, comme connu en soi, un organe d'application des éléments de fibres sur le moule, des moyens pour évacuer la pellicule inférieure de protection en amont du point d'application des fibres sur le moule, et des moyens pour évacuer la pellicule supérieure (souvent en papier), ledit dispositif étant caractérisé en ce que les moyens pour évacuer la pellicule supérieure sont situés à proximité immédiate en amont de l'organe d'application des éléments de fibres sur le moule.

Ce dispositif bénéficie évidemment des avantages du procédé qu'il met oeuvre et qu'on a exposés plus haut.

Dans un mode de réalisation avantageux, l'organe d'application des éléments de fibres sur le moule est constitué par un sabot qui présente une face d'application des éléments de fibres sur le moule et contre lequel arrive le ruban composite, les moyens pour évacuer la pellicule supérieure de protection étant constitués par une fente qui est pratiquée dans ledit sabot et qui présente une largeur correspondant à celle du ruban, ladite fente ayant son entrée sur la partie amont de la face d'application du sabot et, de préférence, faisant avec ladite face, un angle aigu d'inclinaison vers l'arrière par rapport au sens d'arrivée du ruban contre le sabot.

En plus des avantages généraux exposés plus haut, un tel dispositif ne provoque pas la formation de la "vague" observée lorsqu'on utilisait un rouleau d'application, le compactage des fibres est donc maintenu et la pièce finie est de meilleure qualité.

L'invention a aussi pour objet les machines de mise en forme automatique de nappes de fibres sur un moule, qui sont équipées d'un dispositif du genre exposé plus haut et, notamment, tel que décrit et revendiqué plus loin.

L'invention sera mieux comprise à la lecture de la description qui va suivre et à l'examen des dessins annexés qui montrent, à titre d'exemple, un mode de réalisation d'un dispositif d'application de fibres suivant l'invention.

Sur ces dessins :

la figure 1 est une vue en perspective simplifiée destinée à faire comprendre le principe du dispositif,

la figure 2 est, à plus grande échelle, une coupe transversale du ruban composite de fibres, faite suivant la ligne II-II de la figure 1,

la figure 3 est une vue de profil, partiellement en coupe, d'un mode de réalisation du dispositif,

la figure 4 montre, à plus grande échelle, un détail de la partie inférieure de la figure 3, et

les figures 5 à 8 illustrent, d'une manière simplifiée, des phases du fonctionnement du dispositif de la figure 3, avec des moules de diverses configurations.

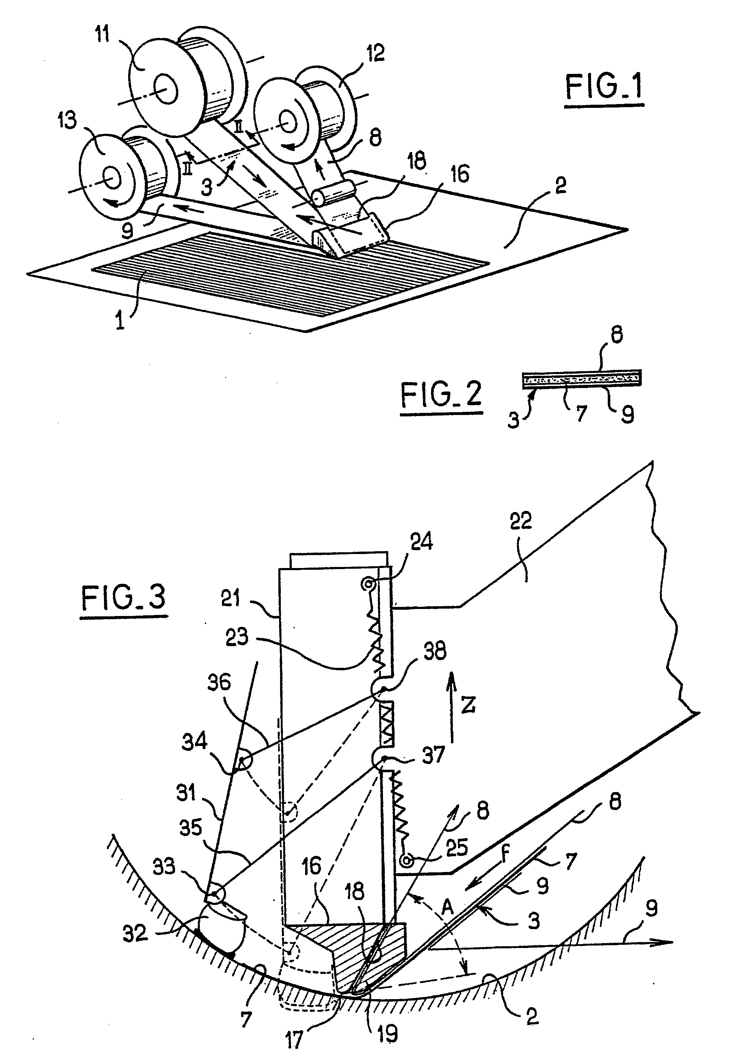

Si l'on se réfère d'abord à la figure 1, on peut voir une nappe de fibres 1 en cours de formation sur la surface d'un moule 2 à partir d'un ruban composite 3. Ce ruban, dont on peut mieux voir la structure sur la coupe à grande échelle de la figure 2, est composé d'éléments de fibres 7 encollées, par exemple par imprégnation de résine époxy, qui sont prédécoupés à la forme et aux dimensions désirées et qui sont maintenus entre deux pellicules de protection, à savoir dans l'exemple : une pellicule supérieure 8 en papier de caractéristiques mécaniques et chimiques appropriées, et une pellicule inférieure 9 constituée d'un mince film de matière plastique. Le ruban composite 3 se déroule d'une bobine 11 (ou d'une cassette) tandis que, pendant le dépôt des fibres sur le moule, le ruban de papier 8 s'enroule sur une bobine 12 et le film plastique 9 sur une autre bobine 13.

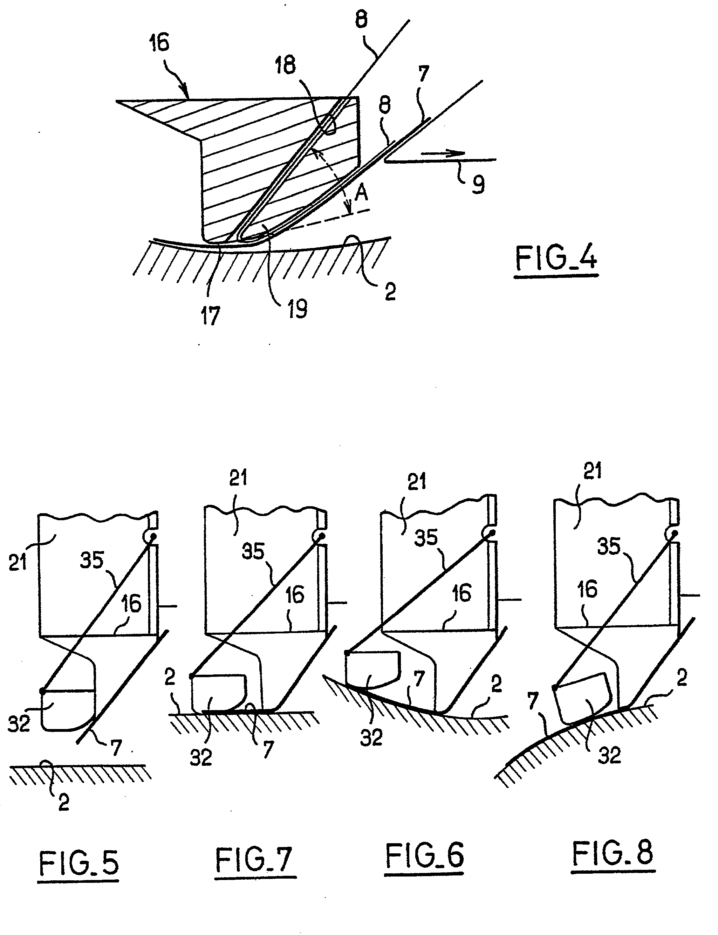

Le dispositif qui assure la pose des éléments de fibres 7 sur la surface du moule 1 comporte un organe d'application qui, dans cet exemple, est constitué par un sabot 16 (Voir aussi figure 3). Sur cette figure 3, la surface du moule 2 est supposée concave, tandis que, sur la figure 1, elle est représentée plane, mais le processus de formation de la nappe de fibres est le même. Le sabot 16 présente une face 17 (voir aussi figure 4) d'application des éléments de fibres 7 sur la surface du moule 2. Le ruban de fibres 3 arrive par l'arrière (sur la figure 3, on a indiqué ce que l'on désigne respectivement par "arrière" et "avant") du sabot 16, c'est-à-dire qu'après avoir été débarrassé de sa pellicule inférieure 9, il atteint d'abord la partie amont de ladite face d'application 17, puis, après avoir été débarrassé aussi de sa pellicule supérieure 8, il atteint la partie aval de ladite face d'application par laquelle il est pressé contre la surface du moule 2. Dans le sabot 16, est pratiquée une fente calibrée 18 de largeur correspondant à celle du ruban de fibres 3 ; elle débouche, d'une part, sur la partie amont de la face d'application 17 et, d'autre part, sur la face supérieure du sabot 16 ; de plus, elle fait, avec la partie amont de la face d'application, un angle aigu "A" d'inclinaison vers l'arrière par rapport au sens de la flèche "f" d'arrivée du ruban 3 contre le sabot. La partie arrière du sabot constitue un organe de séparation du papier en forme de coin 19 à arête arrondie. La fente 18 est conçue pour permettre l'évacuation de la bande de papier de protection 8 au fur et à mesure que les fibres sont déposées sur le moule (voir aussi figure 1), elle sert aussi d'élément de guidage précis du ruban composite au voisinage immédiat de la zone d'application des fibres sur le moule, notamment par les deux extrémités de l'entrée de la fente 18 qui sont situées, respectivement, aux deux extrémités de l'arête arrondie de l'organe séparateur en forme de coin 19 et contre lesquelles glissent les tranches de la pellicule supérieure 8.

Le sabot 16 est fixé à la partie inférieure d'un chariot 21 monté à coulissement en direction verticale (axe Z) sur une tête 22 qui fait partie de l'ensemble d'une machine dont le reste n'a pas été représenté ici pour des raisons de simplification. Les mouvements du chariot sur la tête et les mouvements de la tête au-dessus du moule peuvent être programmés par une commande numérique ou être exécutés sous le contrôle de palpeurs qui explorent la surface du moule pendant les mouvements de balayage de la tête au-dessus du moule. De plus, le chariot 21 est sollicité élastiquement vers le bas par un ressort 23 dont les deux extrémités sont attachées, respectivement, en 24 et 25, au chariot 21 et à la tête 22. Le dispositif comporte encore un élément de compactage 31 dont la partie inférieure porte un bourrelet élastique 32 d'appui des fibres contre le moule. Il est situé à l'avant du sabot 16 et, dans cet exemple, il est porté par la tête 22 de la machine, il n'est pas fixé rigidement sur celle-ci, mais par des moyens propres à lui imprimer un mouvement qui suit temporairement la configuration de la partie du moule contre laquelle sont d'abord déposées les têtes des fibres. Cet élément de compactage 31 présente une orientation générale voisine de la verticale ; il est articulé, par deux axes 33, 34 respectivement sur les extrémités distales de deux biellettes 35, 36 dont les extrémités proximales sont articulées elles-mêmes sur deux autres axes 37, 38 portés par la tête 22. Cet élément de compactage est sollicité vers le bas sous l'action de son propre poids et de celui des pièces mobiles qui le supportent, accentuée éventuellement par celle d'un ressort.

Le fonctionnement du dispositif est le suivant :

Le ruban composite 3 commence à se dérouler avec précision de la bobine ou de la cassette 11 (figure 1) jusqu'à ce que la tête de la découpe à déposer sur le moule se présente sous le sabot 16 débarrassée de la pellicule inférieure 9 et du papier supérieur 8, comme indiqué en 7 sur la figure 5, cette opération se faisant sous le contrôle d'une cellule photoélectrique (non représentée). Toutes les autres opérations se font aussi automatiquement sous le contrôle d'une installation à commande numérique qu'on ne décrira pas en détail ici, car elle ne fait pas partie de l'invention. La tête 22 (figure 3) descend sur le moule 2. Le bourrelet élastique de compactage 32, contre la face inférieure duquel la tête de la découpe 7 à déposer est déjà en contact, arrive le premier contre le moule et appuie donc la tête de découpe fortement contre la surface du moule. La tête 22 de la machine continue à descendre un peu et il arrive un instant où la face inférieure 17 du sabot 16 appuie, à son tour, la nappe de fibres 7 sur le moule sous l'action du poids du chariot 21 et du sabot 16, ainsi que sous l'action du ressort 23, puis la tête 22 s'arrête bientôt de descendre, mais, pendant ce temps, le seul mouvement que le bourrelet élastique de compactage 32 pouvait effectuer, en raison même de la structure du mécanisme qui le supporte, est celui qui l'a fait passer de la position représentée sur la figure 5 à celle représentée sur la figure 6, c'est-à-dire qu'il a avancé un peu par rapport au sabot 16 et au moule 2 en frottant donc, de l'arrière vers l'avant, sur la tête de la découpe 7 qu'il applique efficacement contre la surface du moule. La tête 22 de la machine commence maintenant à reculer, c'est-à-dire à se déplacer vers la droite sur la figure 3, pendant que la pellicule inférieure 9 tirée par la bobine 13 (figure 1) et que le papier supérieur 8 tiré par la bobine 12, se décollent du ruban composite 3 pour ne laisser arriver, contre la face d'application 17 du sabot, que la seule nappe de fibres 7 qui constitue la découpe à déposer sur le moule. Le sabot, sollicité élastiquement contre le moule, applique donc la découpe progressivement sur le moule, depuis la tête de cette découpe bien collée par le bourrelet élastique de compactage 32, jusqu'à son extrémité arrière. A l'instant où le sabot quitte l'extrémité arrière de la découpe, la tête 22 de la machine remonte. L'opération de pose de cette découpe est terminée. La tête de la machine se positionne et s'oriente automatiquement pour préparer la dépose de la prochaine découpe et le même cycle d'opérations recommence.

Sur la figure 6, on vient de voir le comportement du bourrelet élastique de compactage 32 dans le cas où le moule 2 présente une configuration concave, comme envisagé sur la figure 3. Son comportement serait tout à fait analogue dans le cas d'un moule plan, comme représenté sur la figure 7, ou bien sur un moule de configuration convexe, comme représenté sur la figure 8, la seule différence résidant dans le fait qu'il monte et/ou s'éloigne du sabot d'une quantité variable suivant la configuration du moule.

Afin de ne pas alourdir inutilement la description par des détails qui ne concernent pas directement l'invention, on n'a pas décrit les moyens de commande automatique qui déclenchent et contrôlent les diverses opérations entrant dans l'accomplissement d'un cycle, par exemple : la recherche de la découpe à déposer, le déroulement précis de la bande jusqu'à sa position exacte sur le sabot d'application, la descente de la tête sur le moule suivant les trois axes de coordonnées et des axes d'orientation, la détection du contact du sabot contre le moule, le recul de la tête avec déroulement de la bande pressée contre le moule, la détection de la fin de dépose de la découpe, la remontée de la tête, ainsi que son nouveau positionnement et son orientation pour la dépose de la découpe suivante.

**Revendications**

1. Procédé pour mettre en forme automatiquement, sur un moule (2), une nappe de fibres à partir d'un ruban composite (3) constitué d'éléments de fibres encollées (7) qui sont prédécoupés à la forme et aux dimensions désirées et qui sont maintenus entre deux pellicules de protection (8, 9), la pellicule inférieure (9) étant enlevée juste avant l'application des fibres contre le moule (2), caractérisé en ce qu'on guide et sépare la pellicule supérieure (8) (souvent en papier) de protection du ruban de fibres (7) à l'endroit qui précède immédiatement celui où l'on appuie sur le ruban de fibres pour l'appliquer sur le moule (2).

2. Dispositif pour mettre en forme automatiquement, sur un moule (2), une nappe de fibres à partir d'un ruban composite (3) constitué d'éléments de fibres encollées (7) qui sont prédécoupés à la forme et aux dimensions désirées et qui sont maintenus entre deux pellicules de protection (8, 9), comportant un organe d'application (16) des éléments de fibres sur le moule, des moyens (13) pour évacuer la pellicule inférieure (9) de protection en amont du point d'application des fibres sur le moule, et des moyens (18) pour évacuer la pellicule supérieure (8) (souvent en papier), caractérisé en ce que les moyens (18) pour évacuer la pellicule supérieure (8) sont situés à proximité immédiate en amont de l'organe (17) d'application des éléments de fibres (7) sur le moule (2) et sont conçus pour guider le ruban composite avec précision à cet endroit.

3. Dispositif suivant la revendication 2, caractérisé en ce que les moyens d'évacuation de la pellicule supérieure (8) comportent un organe séparateur (19) en forme de coin dont l'arête arrondie présente des éléments de guidage latéral de la pellicule supérieure, les faces inférieure et supérieure du coin constituant, respectivement, les faces d'arrivée et d'évacuation de ladite pellicule qui rebrousse chemin contre l'arête du coin.

4. Dispositif suivant la revendication 2, caractérisé en ce que l'organe d'application des éléments de fibres (7) sur le moule (2) est constitué par un sabot (16) qui présente une face (17) d'application des éléments de fibres (7) sur le moule (2) contre laquelle arrive ledit ruban composite (3), et en ce que les moyens de guidage et d'évacuation de la pellicule supérieure de protection (8) sont constitués par une fente calibrée (18) qui est pratiquée dans ledit sabot et qui présente une largeur correspondant à celle du ruban (3), ladite fente ayant son entrée sur la partie amont de la face d'application (17) du sabot et faisant, avec ladite face, un angle aigu ("A") d'inclinaison vers l'arrière par rapport au sens d'arrivée du ruban (3) contre le sabot.

5. Dispositif suivant la revendication 4, caractérisé en ce que le sabot (16) est fixé à un chariot (21) qui est mobile sur une tête (22) dans une direction sensiblement perpendiculaire à la face d'application précitée (17) du sabot et qui est soumis à l'action d'un ressort de pression (23) qui le sollicite vers le moule (2).

6. Dispositif suivant la revendication 2, caractérisé en ce qu'il est muni d'un élément (31) de compactage des fibres, terminé par un bourrelet élastique (32), disposé en avant de l'organe d'application des fibres (16) par rapport au sens "f" d'arrivée du ruban (3), et porté par un mécanisme (35, 36) propre à lui permettre une liberté de mouvement à deux composantes, à savoir : une composante vers le haut associée à une composante vers l'avant.

7. Dispositif suivant la revendication 6, caractérisé en ce que l'élément de compactage des fibres (31) est soumis à l'action de moyens élastiques qui le sollicitent vers le moule (2).

8. Dispositif suivant la revendication 6, caractérisé en ce que le mécanisme qui porte l'élément de compactage des fibres (31) est constitué de deux biellettes (35, 36) articulées, par leurs extrémités proximales, sur un organe (22) qui supporte l'organe d'application des éléments de fibres (16), et, par leurs extrémités distales, sur ledit élément de compactage.

9. Machine pour mettre en forme automatiquement, sur un moule, une nappe de fibres, caractérisée en ce qu'elle comporte un dispositif suivant l'une quelconque des revendications 2 à 8.

## Patentansprüche

1. Verfahren zur automatischen Herstellung einer Faserdecke aus einem Verbundband (3), das aus verleimten Faserelementen (7) besteht, die in der gewünschten Form und den gewünschten Maßen vorgeschnitten sind und zwischen zwei Schutzfilmen (8, 9) gehalten werden, auf einer Form (2), wobei der untere Film (9) direkt vor dem Aufbringen der Fasern auf die Form (2) abgezogen wird, dadurch gekennzeichnet, daß der obere Schutzfilm (8) (häufig aus Papier) an einen Punkt geführt und dort von dem Faserband (7) abgetrennt wird, der unmittelbar vor der Stelle liegt, an der man auf das Faserband drückt, um dieses auf die Form (2) aufzubringen.

2. Vorrichtung zur automatischen Herstellung einer Faserdecke aus einem Verbundband (3), das aus verleimten Faserelementen (7) besteht, die in der gewünschten Form und den gewünschten Maßen vorgeschnitten sind und zwischen zwei Schutzfilmen (8, 9) gehalten werden, auf einer Form (2), mit einer Einrichtung (16) zum Aufbringen der Faserelemente auf die Form, mit Einrichtungen (13) zur Entfernung des unteren Schutzfilms (9) vor dem Punkt, an dem die Fasern auf die Form aufgebracht werden, und mit Einrichtungen (18) zur Entfernung des oberen Schutzfilms (8) (häufig aus Papier), dadurch gekennzeichnet, daß die Einrichtungen zur Entfernung des oberen Films (8) unmittelbar vor der Einrichtung (17) zum Aufbringen der Faserelemente (7) auf die form (2) angeordnet sind und das Verbundband genau zu diesem Punkt führen sollen.

3. Vorrichtung gemäß Anspruch 2, dadurch gekennzeichnet, daß die Einrichtungen zur Entfernung des oberen Films (8) eine keilförmige Trenneinrichtung (19) umfassen, deren abgerundete Kante querliegende Führungselemente für den oberen Film aufweist, wobei die Unter- und Oberseite des Keils die Zufuhr- bzw. Abfuhrseite des Films bilden, der an der Kante des Keils umgelegt wird.

4. Vorrichtung gemäß Anspruch 2, dadurch gekennzeichnet, daß die Einrichtung zum Aufbringen der Faserelemente (7) auf die Form (2) aus einem Schuh (16) besteht, der eine Seite (17) zum Aufbringen der Faserelemente (7) auf die Form (2) aufweist, der das Verbundband (3) zugeführt wird, und daß die Einrichtungen zur Führung und Entfernung des oberen Schutzfilms (8) aus einem in dem Schuh ausgebildeten, kalibrierten Schlitz (18) bestehen, dessen Breite der des Bandes (3) entspricht, wobei der Schlitz in dem Bereich vor der Aufbringungsseite (17) des Schuhs einen Einlaß aufweist und mit dieser Seite einen spitzen Neigungswinkel ("A") nach hinten in Bezug auf die Zuführrichtung des Bandes (3) zum Schuh bildet.

5. Vorrichtung gemäß Anspruch 4, dadurch gekennzeichnet, daß der Schuh (16) an einem Schlitten (21) befestigt ist, der auf einem Kopf (22) genau senkrecht zur Aufbringungsseite (17) des Schuhs verschiebbar ist und auf eine Druckfeder (23) reagiert, die ihn zur Form (2) hin bewegt.

6. Vorrichtung gemäß Anspruch 2, dadurch gekennzeichnet, daß sie mit einem Teil (31) zur Faserverdichtung versehen ist, das durch einen elastischen Wulst (32) begrenzt, vor der Einrichtung zum Aufbringen der Fasern (16) in bezug auf die Zufuhrrichtung "f" des Bandes (3) angeordnet ist und von einem Mechanismus (35, 36) getragen wird, der ihr eine Bewegungsfreiheit mit zwei Komponenten ermöglicht, nämlich: eine nach oben gerichtte Komponente in Verbindung mit einer nach vorne gerichteten Komponente.

7. Vorrichtung gemäß Anspruch 6, dadurch gekennzeichnet, daß das Faserverdichtungsteil (31) auf die Wirkung der elastischen Einrichtungen reagiert, die es in Richtung der Form (2) lenken.

8. Vorrichtung gemäß Anspruch 6, dadurch gekennzeichnet, daß der das Faserverdichtungsteil (31) tragende Mechanismus aus zwei Armen (35, 36) besteht, die mit ihren nahen Enden an einem Teil (22), das die Einrichtung zum Aufbringen der Faserelemente (16) trägt, und mit ihren entfernten Enden an dem Verdichtungsteil angelenkt sind.

9. Maschine zur automatischen Herstellung einer Faserdecke auf einer Form, durch gekennzeichnet, daß sie eine Vorrichtung gemäß einem der Ansprüche 2 bis 8 umfaßt.

## Claims

1. A process for automatically shaping a sheet of fibres on a mould (2) from a composite strip (3) consisting of adhesive sized fibre elements (7) precut to the required shape and dimensions and retained between two protective films (8, 9), the bottom film (9) being removed immediately before the fibres are engaged on the mould (2), characterized in that the top protective film (8) (often made of paper) is guided and separated from the fibre strip (7) at the place immediately before the place where the fibre strip is pressed into engagement with the mould (2).

2. A device for automatically shaping a sheet of fibres on a mould (2) from a composite strip (3) consisting of adhesive sized fibre elements (7) precut to the required shape and dimensions are retained between two protective films (8, 9), the apparatus comprising: an applicator (16) for engaging the fibre elements on the mould; means (13) for removing the bottom protective film (9) upstream of the place of engagement of the fibres on the mould; and means (18) for removing the top film (8) (often made of paper), characterized in that said means (18) for removing the top film (8) being disposed at a place immediately upstream of the applicator (17) for engaging the fibre elements (7) on the mould (2) and being adapted to guide the composite strip accurately at the last-mentioned place.

3. A device according to claim 2, characterized in that the means for removing the top film (8) comprise a wedge-shaped separator (19) whose rounded edge has elements for guiding the top film laterally, the bottom surface and top surface of the wedge being operative as the entry surface and removal surface rspectively of the top film, which turns back around the edge of the wedge.

4. A device according to claim 2, characterized in that the applicator for engaging the fibre elements (7) on the mould (2) is in the form of a pad (16) having a surface (17) which engages the fibre elements (7) on the mould (2) and on which the composite strip (3) arrives; and the means for guiding and removing the top protective film (8) are in the form of a calibraed slot with which the pad is formed and which has the same width as the strip (3), the slot having its entry in the upstream part of the pad surface (17) and forming therewith an acute angle ("A") inclined rearwardly relatively to the direction in which the strip (3) arrives at the pad.

5. A device according to claim 4, characterized in that the pad (16) is secured to a slide (21) movable on a head (22) in a direction substantially perpendicular to the pad surface (17) and biased by a compression spring (23) towards the mould (2).

6. A device according to claim 2, characterized in that it has a fibre-compacting element (31) terminating in a resilient bead (32) disposed at the front of the fibre applicator (16) as considered in the strip arrival direction "f" and carried by a mechanism (35, 36) giving it freedom of movement with two components, namely an upwards component associated with a forwards component.

7. A device according to claim 6, characterized in that the fibre-compacting element (31) is biased towards, the mould (2) by resilient means.

8. A device according to claim 6, characterized in that the mechanism carrying the fibre-compacting element (31) is in the form of two rods (35, 36) articulated, at those of their ends which are distant from one another, to an element (22) carrying the fibre applicator (16), while at their ends which are distant from one another the rods are pivotally connected to the compacting element.

9. An apparatus for automatically shaping a sheet of fibres on a mould, characterized in that it comprises a device according to claim 2.

FIG.1

FIG.2

FIG.3

FIG_4

FIG.5    FIG.7    FIG.6    FIG.8